Europäisches Patentamt

European Patent Office

Office européen des brevets

(11) Publication number: **0 081 589**
A1

# EUROPEAN PATENT APPLICATION

published in accordance with Art. 158(3) EPC

(21) Application number: 82901612.0

(22) Date of filing: 26.05.82

Data of the international appli-
cation taken as a basis:
(86) International application number:
PCT/JP 82/00196
(87) International publication number:
WO 82/04212 (09.12.82 82/29)

(51) Int. Cl.³: **B 23 Q 33/00**

(30) Priority: 29.05.81 JP 82380/81

(43) Date of publication of application: 22.06.83
Bulletin 83/25

(84) Designated Contracting States: DE FR GB

(71) Applicant: Fujitsu Fanuc Limited, 5-1,
Asahigaoka 3-chome Hino-shi, Tokyo (JP)

(72) Inventor: NOZAWA, Ryoichiro, 12-1-2105, Sarugaku-cho,
Shibuya-ku, Tokyo 150 (JP)
Inventor: KAWAMURA, Hideaki, 1375-5, Narahara-cho,
Hachioji-shi, Tokyo 193 (JP)

(74) Representative: Billington, Lawrence Emlyn et al,
HASELTINE LAKE & CO Hazlitt House 28 Southampton
Buildings Chancery Lane, London WC2A 1AT (GB)

(54) **NUMERICAL CONTROL DEVICE.**

(57) Numerical control derice which is designed to ac-
curately machine a workpiece of a complicated shape which
is difficult to be numerically controlled by calculations in the
same simple manner as in conventional copy control ma-
chining. For that purpose, this device includes a copy con-
troller (A) copying the shape of a model (1) by a tracer head
(6), and a model shape indexing circuit (25) which indexes
the shape of the model (1) in accordance with the positional
information from position detectors (13, 15) mounted on
copy controlling drive shafts (9, 11) respectively, and a
displacement signal from the tracer head, and produces
command data indicating the path for moving a cutter (7),
thereby obtaining the necessary numerical information for
machining a workpiece in a copy operation and performing
the actual machining by a numerical controller (B) in accor-
dance with the command data.

- 1 -                    0081589

SPECIFICATION

NUMERICAL CONTROL EQUIPMENT

TECHNICAL FIELD

The present invention relates to numerical control equipment which obtains numerical information by a trace operation.

TECHNICAL BACKGROUND

A tracer control system which computes a trace direction and a trace velocity with a displacement signal from a tracer head tracing the model surface and performs cutting is advantageous in that it permits easy cutting of a workpiece of an intricate shape which is difficult to express as a numeric value by computation. But this system possesses the disadvantage that since a correcting operation by a corrective component based on the displacement signal lags a feed operation for tracing, the cutter may bite into or move away from the workpiece at a portion where the shape of the model suddenly changes, for example, at a corner portion of the model, decreasing the cutting accuracy.

DISCLOSURE OF THE INVENTION

An object of the present invention is to overcome such a defect of the prior art so that a workpiece of an intricate shape which is difficult to express as a numeric value by computation can also be cut with the same ease as in the conventional tracer control machining and with high accuracy.

The numerical control equipment of the present invention is provided with a tracer head which is fed by a tracer control drive shaft to trace the model surface and output a displacement signal, a tracer controller which calculates the direction of tracing and the tracing velocity on the basis of the displacement signal from the tracer head and drives the tracer control drive shaft to perform tracer control, a model configuration indexing circuit which indexes the shape of the model from detected position information of the tracer control drive shaft and the displacement signal from the tracer head and creates commond data indicating a path along which a cutter is to move, and a numerical controller which executes the command data created by the model configuration indexing circuit to control a numerical control drive shaft for feeding the cutter and a workpiece relative to each other. Since cutting is carried out in the same manner as in the case of ordinary numerical control, there is no possibility of the cutter biting into or moving away from the workpiece and, consequently, the cutting accuracy would not be impaired. Furthermore, since numerical information is obtained on-line by the tracing operation, the cutting can be performed easily as is the case with the prior art tracer control system.

BRIEF DESCRIPTION OF THE DRAWINGS

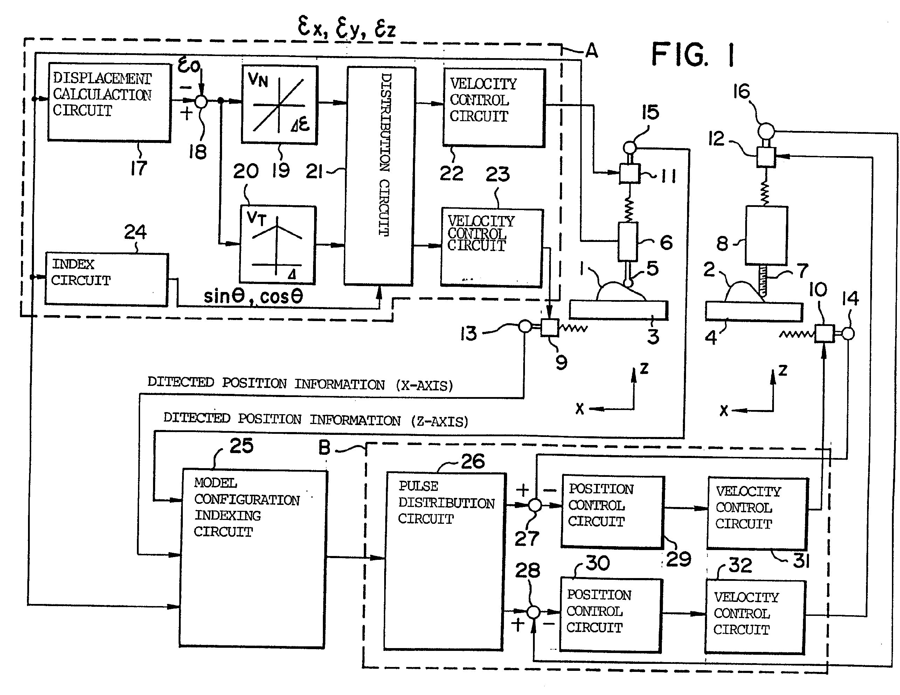

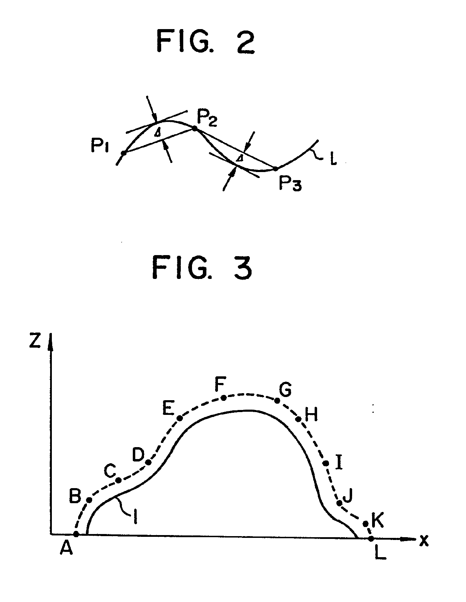

Fig. 1 is a block diagram illustrating the principal part of equipment embodying the present invention; and Figs. 2 and 3 are schematic diagrams explanatory of its operation.

PREFERRED EMBODIMENTS OF THE INVENTION

Fig. 1 is a block diagram illustrating the principal part of equipment embodying the present invention. Reference numeral 1 indicates a model; 2 designates a workpiece; 3 and 4 identify moving tables; 5 denotes a stylus; 6 represents a tracer head; 7 shows a cutter; 8 refers to a cutter head; 9 to 12 signify motors; 13 to 16 indicate position detectors; 17 designates a displacement calculation circuit; 18, 27 and 28 identify adders; 19 and 20 denote velocity calculation circuit; 21 represents a distribution circuit; 22, 23, 31 and 32 show velocity control circuits; 24 refers to an index circuit; 25 signifies a model configuration indexing circuit; 26 indicates a pulse distribution circuit; 29 and 30 designate position control circuits; A identifies generally a tracer controller; and B denotes generally a numerical controller. For convenience of description, motors for independently driving the moving tables 3 and 4 in the Y-axis direction and their drive and detection systems are mitted from Fig. 1.

In Fig. 1, the moving table 3 carrying the model 1 and the moving table 4 carrying the workpiece 2 are independently movable by the X-axis motors 9 and 10, respectively. On the side of the moving table 3 there are provided the tracer head 6 having attached thereto the stylus 5, the motor 11 for

- 4 -

0081589

moving the tracer head in the Z-axis direction and the position detector 15 for detecting the position of the motor. On the side of the moving table 4 there are provided the cutter head 8 having mounted thereon the cutter 7, the motor 12 for moving the cutter head in the Z-axis direction and the position detector 16 for detecting the position of the motor. Thus the tracer head 6 and the cutter head 7 are arranged so that they can be controlled in position independently of each other.

Siaplacement signals $\epsilon_x$, $\epsilon_y$ and $\epsilon_z$ from the tracer head 6 are provided to the tracer controller A and the model configuration indexing circuit 25. Based on the displacement signals, the tracer controller A drives the motors 9 and 11 which are tracer control motors, performing known tracer control. That is to say, when the stylus 5 is displaced upon making contact with the model 1, the displacement calculation circuit 17 obtains a composite displacement signal $\epsilon = \sqrt{\epsilon^2_x + \epsilon^2_y + \epsilon^2_z}$ from the displacement signals $\epsilon_x$, $\epsilon_y$ and $\epsilon_z$ corresponding to the displacement, and the indexing circuit 24 yields displacement-direction signals $\sin\theta$ and $\cos\theta$. The composite displacement signal $\epsilon$ is applied to the adder 18 to obtain a difference $\Delta\epsilon$ between it and a reference displacement signal $\epsilon_0$ and, in the velocity calculation circuits 19 and 20, normal and tangential velocity signals $V_N$ and $V_T$ are obtained. In the distribution circuit 21, a command velocity signal is prepared on the basis of the

displacement-direction signals $\sin\theta$ and $\cos\theta$, and the velocity control circuits 22 and 23 follows the command velocity signal given thereto to drive the motors 9 and 11, causing the tracer head 6 to trace the model surface.

To the model configuration indexing circuit 25, which is supplied with the displacement signals $\varepsilon_x$, $\varepsilon_y$ and $\varepsilon_z$, is further applied detected position information from the position detectors mounted on the motors 9 and 11. On the basis of the mechanical position of the tracer head 6 obtained from the detected position information (The mechanical position means the position of the center of the stylus 5 when its displacement is zero.) and the displacement signals $\varepsilon_x$, $\varepsilon_y$ and $\varepsilon_z$ are indexed the configuration of the traced model surface.

In this case, since the vector quantity from the mechanical position of the tracer head to the position of the center of the stylus 5 at that time can be obtained from the displacement signals $\varepsilon_x$, $\varepsilon_y$ and $\varepsilon_z$, the indexing is performed by adding the vector quantity to the detected mechanical position through using an operating function or the like of a processor. Incidentally, sampling of the shape of the model 1 takes place at such intervals that the model configuration can be recognized within a limit of permissible errors. This can be carried out by sampling for each predetermined distance, or by inputting data at a point $P_2$ where a maximum distance between a straight line joining a starting

point $P_1$ and the current position and the locus $\ell$ of the center of the stylus reaches a predetermined error quantity $\Delta$, then using the point $P_2$ as the starting point and thereafter perfomring similar processing as shown in Fig. 2, for instance.

Having indexed the shape of the model as described above, the model configuration indexing circuit 25 obtains from the indexed model configuration a path where the cutter 7 should move along a configuration whcih is identical with or similar to the indexed one, and creates command data. For example, in the case where the indexing of the shape of the model has been performed at points A to L on the model 1 of such a shape as shown in Fig. 3, command data for a path A → B, B → C, ..... K → L is created. And this command data is provided to the numerical controller B to perform ordinary linear interpolation, cutting the workpiece 2. That is to say, command pulses for the X-axis and the Z-axis are produced in the pulse distribution circuit 26 based on the command data, and the difference betwwen a commanded quantity $X_p$ for the X-axis and the detected position information from the position detector 14 is obtained by the adder 27 and then applied to the position control circuit 29. Furthermore, a commanded quantity $Z_p$ for the Z-axis is applied to the adder 28 to obtain the difference between it and the detected position information from the position detector 16,

0081589

and this difference is provided to the position control circuit 30. The position control circuit 29 and the velocity control circuit 31 and the position control circuit 30 and the velocity control circuit 32 constitute X-axis and Z-axis servo drive systems, respectively, by which the X-axis and Z-axis motors 10 and 12 are driven so that positional deviations may be reduced to zero, moving the cutter 7 along the path commanded by the command data.

By the way, a buffer memory is provided in the model configuration indexing circuit 25 for temporally storing the model configuration or the command data detected by the tracer head which precedes the cutter. The extent to which the tracer head goes ahead of the cutter is determined in view of a time lag in the response of the servo system of the numerical controller B and the capacity of the abovesaid buffer memory. The minimization of the time difference between the tracer head and the cutter permits the reduction of the memory capacity, and hence is economical. Moreover, according to the method of the present invention, since the positional relationship between the tracer head and the cutter can be changed freely, the direction of tracing can be reversed by causing the tracer head to go ahead of the cutter in a direction reverse from that in the above, and this permits not only one-way tracing, contour tracing and 3-dimensinal tracing but also both-way tracing and partial tracing.

As has been described in the foregoing, the present invention is provided with a tracer controller for tracing the model surface, a model configuration indexing circuit for indexing the model configuration during the tracing operation and creating command data on the path along which the cutter is to move and a numerical controller for executing the command data to control motors for numerical control so that the cutter moves along the indexed path, and cutting is performed in the same manner as in the case of ordinary numerical control. Accordingly, the cutter would not bite into or move away from a workpice and, consequently, the cutting accuracy would not be decreased. Furthermore, since the numerical information is obtained on-line by the tracing operation, cutting can be effected with the same ease as in the case of using the conventional tracer control system.

CLAIM

Numerical control equipment which is characterized by the provision of a tracer head fed by a tracer control drive shaft, for tracing the model surface to output a displacement signal; a tracer controller for calculating the direction of tracing and a trace velocity from the displacement signal from the tracer head to trive the tracer control drive shaft for performing tracer control; a model configuration indexing circuit for indexing the configuration of a model from detected position information of the tracer control drive shaft and the displacement signal from the tracer head to prepare command data indicating a path to be followed by a cutter; and a numerical controller for executing the command data prepared by the model configuration indexing circuit to control a numerical control drive shaft for feeding the cutter and workpiece relative to each other.

FIG. 1

2

# FIG. 2

# FIG. 3

# INTERNATIONAL SEARCH REPORT

International Application No. PCT/JP82/00196

## I. CLASSIFICATION OF SUBJECT MATTER (if several classification symbols apply, indicate all) ³

According to International Patent Classification (IPC) or to both National Classification and IPC

Int. Cl.³     B23Q33/00

## II. FIELDS SEARCHED

### Minimum Documentation Searched ⁴

| Classification System | Classification Symbols |
|---|---|
| IPC | B23Q33/00 - 35/16 |

### Documentation Searched other than Minimum Documentation to the Extent that such Documents are Included in the Fields Searched ⁵

| | |
|---|---|
| | Jitsuyo Shinan Koho     1961 - 1982 <br> Kokai Jitsuyo Shinan     1971 - 1982 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| A | JP, A, 55-77446 (Mitsubishi Electric Corp.) <br> 11 June, 1980 (11.06.80) | 1 |
| A | JP, A, 55-54160 (Fujitsu Fanuc Ltd.) <br> 21 April, 1980 (21.04.80) | 1 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| August 12, 1982 (12.08.82) | August 23, 1982 (23.08.82) |

| International Searching Authority ¹ | Signature of Authorized Officer ²⁰ |
|---|---|
| Japanese Patent Office | |

Form PCT/ISA/210 (second sheet) (October 1981)